# EUROPEAN PATENT APPLICATION

(11) **EP 0 880 910 A1**
(43) Date of publication of application: **02.12.1998**
(21) Application number: 97108704.4
(22) Date of filing: 30.05.1997
(51) Int. Cl.: A41H 3/00

(54) **Method and system for automatic marker making**

(71) Applicant: Assyst GmbH, 95551 Kirchheim (DE)
(72) Inventor: Palfreyman, Niall, 85356 Freising (DE)
(74) Representative: Zangs, Rainer E., Dipl.-Ing.

(57) **Abstract**

This invention is specifically concerned with the marker making problem which arises in garment industry, i.e. the problem of placing a given number of pieces on a cloth observing certain constraints like minimum wastage. The method of automatically making markers according to this invention is characterized by the use of a goal net which consists of goals and interactors, connected to each other, and for which a first and a second direction of information flow is defined from a top level goal to a bottom level goal / an interactor and from a bottom level goal / an interactor to a top level goal, respectively.

## Description

The invention relates a method and a system for automatic marker making, for example for the manufacture of sewn goods.

In industry there are many problems which involve the problem of packing objects into containers in such a way as to minimise or maximise some quantity subject to certain constraints. An example might be the packing of crates into containers so as to maximise the weight in the container or packing circuits onto a microchip so as to maximise the computing power on the chip whilst not overheating the chip. This invention is specifically concerned with the marker making problem which arises in garment industry, i.e. the problem of placing a given number of pieces on a cloth observing certain constraints like minimum wastage.

The marking problem concerns the packing of 2-dimensional polygons into a given area without any overlap between the polygons, in such a way as to minimise the area not contained in the collection of polygons. An alternative formulation of this problem is to pack the polygons into a given rectangle such as to maximise the number of polygons which fit into the rectangle.

Originally, markes were created manually by experienced marker makers. Later the process of marker making was partially automated and many attempts have been made to fully automate the marker making process.

For example, EP 0 664 091 A1 discloses a method and a system for automatic marker making in which the creation of a new marker is facilitated through the use of already existing marker designs. A computer database of existing markers is searched for markers that are "similar" to the marker being created. An existing marker is considered "similar" if it meets certain user-specified, marker making criteria. Initially, position and orientation data from pattern pieces in the "similar" marker are used to position and orient corresponding pieces in the new marker. Then, the new marker is "compacted" using a software routine to nest all of the new pieces simultaneously, instead of nesting one or two pieces at a time. The compacting routine corrects overlaps between pieces and assures that the new pieces are nested as efficiently as possible.

It can be shown that the simplified form of the marking problem, in which rotations and reflections of the pieces are ignored, is NP-complete. No-one yet knows whether the addition of rotations lifts the marking problem into an even higher realm of complexity. What this statement means in practical terms is that it is almost certainly impossible to find an algorithmic method which will solve the general marking problem within any kind of acceptable time. Thus marking demands an alternative to the purely algorithmic approach.

Further, the effects of a small mistake made early in the laying of a marker are amplified at least exponentially throughout the laying process. Thus a misjudgement at the very beginning of a marker can remain undetectable for an arbitrarily long time and yet simultaneously make the target utilisation impossible to achieve. In other words, there is no way to determine whether or not a develolping marker will be a good one without physically completing the marker.

Against this background, it is the object of the invention to provide an efficient method and system for automatic marker making.

The invention achieves the above object by providing a method and system for automatic marker making using a goal net which consists of goals and interactors as described in the independent claims. Advantageous embodiments are described in the subclaims.

In the following the method and the system for automatically making markers according to the invention will be explained in greater detail with referrence to the drawings.

Figure 1 shows an example of a marker.

Figure 2 shows part of a goal net according to the invention.

Figures 3A and 3B show examples of rectagular markers having rectangular pieces.

Figure 4 shows an example goal net structure according to the invention.

Figures 5A to 5H show a series of markers obtained by the method and system according to the invention.

Figures 6A to 6K show a further series of markers obtained by the method and system according to the invention.

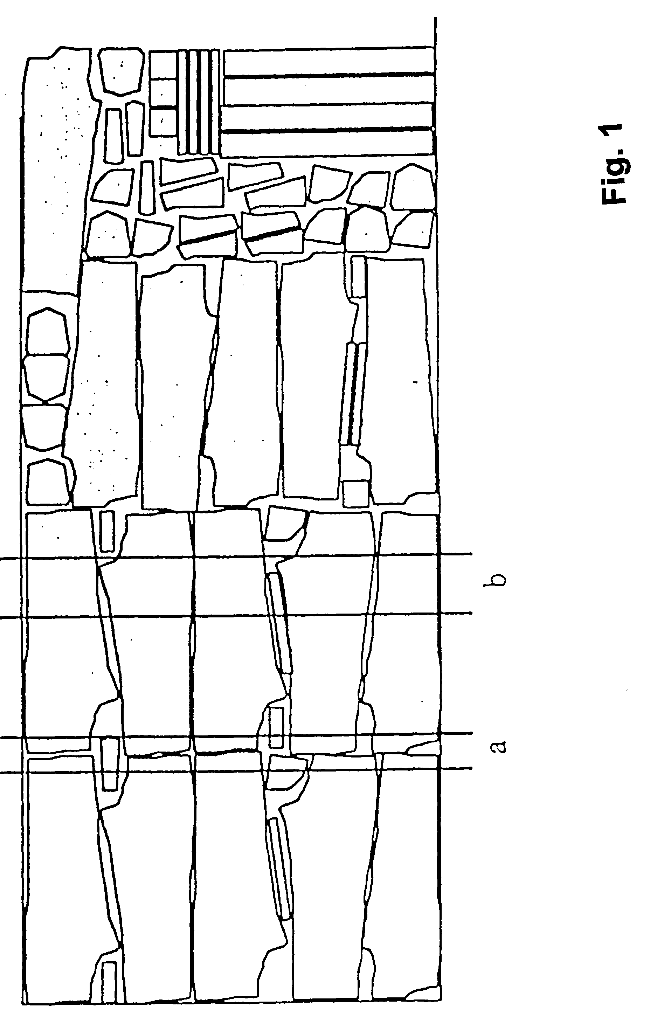

The method and system of the invention include the concept of piece clusters into solving the marking problem. A marker can be understood as a single large cluster of pieces that can be divided into smaller clusters, for example in a jeans marker shown in Figure 1 a group of waistbands in the bottom right and the two tiers of panels lying to the right and left of the lines a. The smaller clusters can be divided into even smaller clusters until arriving at the individual piece.

The concept of piece clusters allows to identify local and global goals. On one hand, a cluster of pieces can be manipulated in isolation without effecting other clusters. On the other hand, a cluster of pieces can be considered within the entire context of its relationship to other clusters. The method and system according to the invention takes simultaneously account of global and local considerations by implementing a goal net.

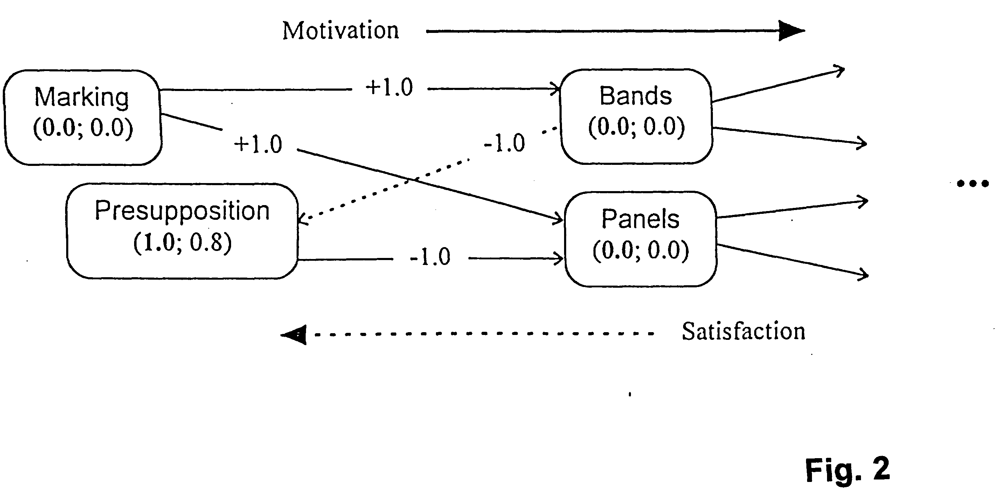

Figure 2 illustrates the structure of a goal net. Generally, the goal net comprises goals and interactors. Goals are decision-making agents: they have no power to act, but merely delegate responsibility for action to other agents. Interactors are operating agents: they are unable to delegate responsibility further, and instead are dedicated to performing some operation on the marker (e.g. placing, shifting, rotating of pieces/clusters etc.) themselves. When they have performed this task they pass back information to the goals so that they can initiate further processing. A top goal is connected to sub-goals which are either connected to further sub-goals or to interactors. Interactors provide the link between the goal net and the marker.

A goal net involves two flows of influence: motivation and satisfaction. Referring to Figure 2, in the first sweep from left to right through the goal net, the top-level goal MARKING motivates each of the subgoals BANDS and PANELS, which in turn motivate various further subgoals (e.g. HOLE-FINDING, PLACEMENT-SELECTION, etc.) or interactors (not shown).

When all motivational influence has been allowed to percolate down from the top-level goal to the bottom-level goals, some of the bottom-level goals will be highly motivated and others will not. Only those bottom-level goals which are well-motivated will actually influence the next step in building the marker: both the percolation process and the activation of the interactors are performed nondetermistically. In this way the goal net permits a goal-driven, symbolic guiding of the marking process, while simultaneously permitting arbitrarily random fluctuations in processing.

When a bottom-level goal is activated, it operates in some way upon the marker via one or more interactors. This operation then yields some kind of measure of its satisfaction, i.e. the extent to which the operation was successful. In the second sweep from right to left through the goal net, this satisfaction is passed back from the bottom-level goals to the top-level goals. This enables the bottom-level goals to do two things:
1. to notify the top-level goal of the global satisfaction contained in the current state of the marker, and
2. to exercise a bottom-up influence on top-level goal motivation in the next step of processing.

The satisfaction passed back up the goal net influences the motivations in the next left-to-right sweep via a memory capability in each goal.

Each goal in the goal net as shown in Figure 2 potentially possesses two capabilities: TENDENECY and MEMORY. TENDENCY is the inherent tendency of a goal to be either highly active (1.0) or non-active (0.0), or somewhere inbetween. Some goals (e.g. MARKING, BANDS and PANELS) are inherently non-active unless influenced by other goals; other goals (e.g. PRESUPPOSITION) tend to be inherently highly active unless influenced to the contrary by other goals. TENDENCY is the first number in brackets in each goal shown in Figure 2; the second number in brackets is the MEMORY of the goal. MEMORY is similar to inertia and indicates the non-responsitivity of a goal: it represents the extent to which a goal is resistant to influence from other goals. A goal with zero MEMORY (0.0) is totally under the influence of external pressures, while the goal with MEMORY (1.0) refuses to be affected in any way by external influences: it "remembers" its old activation state perfectly.

The above explanation enables to understand the meaning of the goal PRESUPPOSITION in Figure 2. PRESUPPOSITION is inherently highly active (1.0) and has a fairly high memory (0.8). It has a strong deactivating influence (-1.0) on the goal PANELS, and so in the normal course of events it ensures that the goal PANELS is non-active. However, any satisfaction passed back by the goal BANDS has a strong deactivating influence (-1.0) on PRESUPPOSITION. This means that in the event that BANDS is highly satisfied, the goal PRESUPPOSITION is switched off, thus enabling PANELS to become highly motivated in the next motivation sweep through the goal net. Thus the goal PANELS can be said to presuppose the satisfaction of BANDS.

The entire goal net is configured by means of a goal net file. The following is a sample of the goal net file text required to build the goal net of Figure 2:
1. MARKING uses BANDS to extend 0.4.
2. MARKING uses PANELS to extend 0.6.
3. PANELS presupposes BANDS.

Line 3. automatically sets up an implicit background goal PRESUPPOSITION which implements the presupposition relationship as described above. It is nevertheless important to be aware of the nature of this relationship: it is very different from a time-sequencing relationship of the form "First do the Bands and then do the Panels". Such a relationship specifies the strict order in which things are to be done, and is highly non-adaptable to circumstance. In contrast, the presupposition relationship merely suggests a distribution of attention among goals at any given moment: "Only pay attention to PANELS if BANDS is highly satisfied". This relationship permits changes to BANDS later in the marking process, holding other goals in abeyance until the changes to BANDS have been completed. Also, the presupposition relationship is nondeterministic: it can be made so strict that BANDS is always completed before PANELS, but it can also be made slack enough that work starts on PANELS before BANDS is fully satisfied.

Clusters are the central symbolic aspect of the description of the marker's current state at any given moment. They are the fundamental elements which are manipulated by the interactors, and constitute a geometrically based grouping of laid pieces and/or further subclusters which is relatively decoupled from other clusters in the marker. They are characterised by their geometrical boundary (which frequently overlaps with that of other clusters) and by the kind of pieces they are permitted to contain. An example of a highly constrained cluster in Figure 1 is the group of bands in the lower right of the marker - the cluster is tightly constrained both geographically and also in terms of the type of piece which it may contain. By comparison, the leftmost tier in Figure 1 is only loosely constrained on its right-hand side (the area marked by the letter a) and may contain almost all types of pieces.

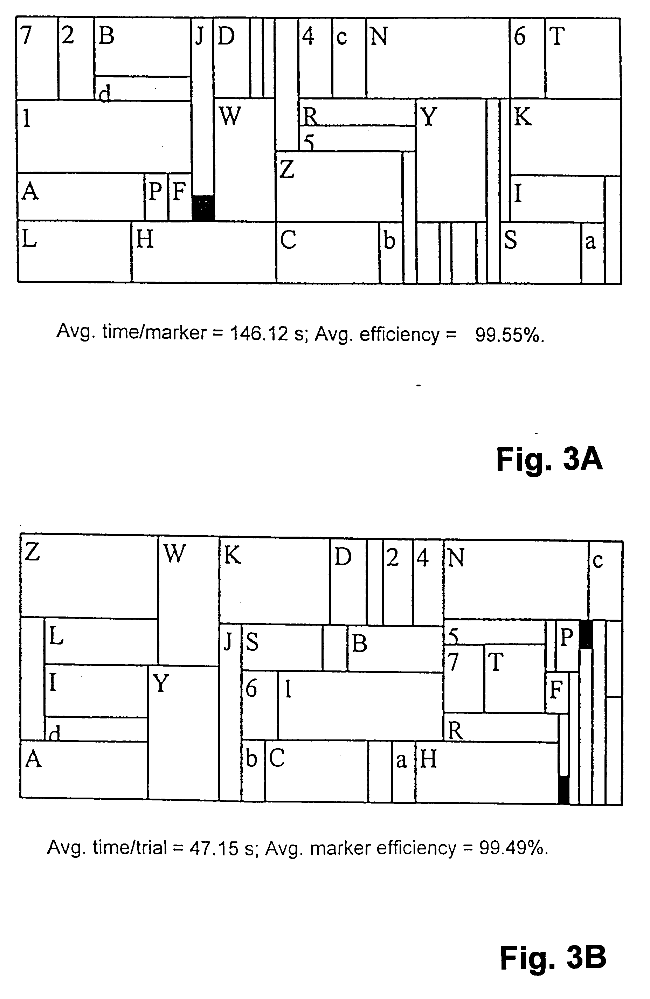

As an example, the small-scale problem of the two markers in Figure 3, which consist entirely of rectangular pieces without any use of rotation or tilt, will be considered in the following

The marker in Figure 3A was laid all in one go with no clustering, while that in Figure 3B clusters the bands into the bottom right of the marker, and ensures a sharply defined tier shown here between the pieces W and K. Simply defining these clusters reduces the average runtime for this marker (for example: from 146.12 seconds to 106.3 seconds), but if the piece type constraint that the system should place one of the relatively difficult pieces X or J within the leftmost tier, is imposed aditionally then the time is further reduced (for example: to 37,15 seconds), as shown in Figure 3B.

In the following the concepts of interactors in a goal net will be explained.

When an interactor is called into action it performs two tasks: it operates on the marker in some way and evaluates the results of its operation. This evaluation is then passed back up to relevant goals in the goals network. These actions of the interactor are performed in three different stages, which called scouting, testing and building tasks in the following.

In the first stage, to avoid wasting precious computing resources, an interactor merely establishes whether it should continue its activity. To this end the interactor sets in motion its scouting task. The scouting task determines whether the approximate conditions for execution of the interactor are fulfilled.

If the scouting task finds that the interactor's conditions are not fulfilled, then the interactor stops there. If, however, the conditions are fulfilled, then a more extensive check is carried out by the testing task. The testing task assumes that the approximate check carried out by the scout is correct, and that the interactor can continue with its actions, but before that happens the testing task checks what would be the benefit of pursuing the activities of the interactor. The result is an assessment of the likely improvement in the marker to be expected from carrying out a detailed thoroughgoing computation. The testing task usually also saves various initial calculations required later by the builder.

Again, if the testing task finds that the benefits of executing the interactor are very low, then the interactor stops there. If, however, the benefits are high enough, the interactor executes its building task. The building task performs all computations necessary for fulfilling the aims of the interactor. This may involve extensive allocation of computing resources. For this reason, the scouting and testing tasks are performed first. When the building task is finished, the interactor's work is complete; some procedure has been performed on the marker and an accurate evaluation of the effects is passed back to the goal net.

An important point about interactors is that any interactor can do its job totally independently of all considerations other than the present state of the marker. Interactors never rely on any particular activity having previously been performed, but rather take their cue solely from patterns which they seek in the current state of the data in the marker configuration.

In the following a typical marker making process in the case of simple rectangular pieces will be described as illustrated in figure 3B.

The method and system for automatic marker making according to the invention is based on the following information:
- A marker definition file - contains description of the pieces and their properties.
- A constraint file - contains the constraints which are relevant to the marker.
- A goal net file - configures the goals and interactors of the goal net encoding a particular laying strategy.
- A taxonomy file - specifies a taxonomy for the piece types, e.g. Panel, Watchpocket, etc.

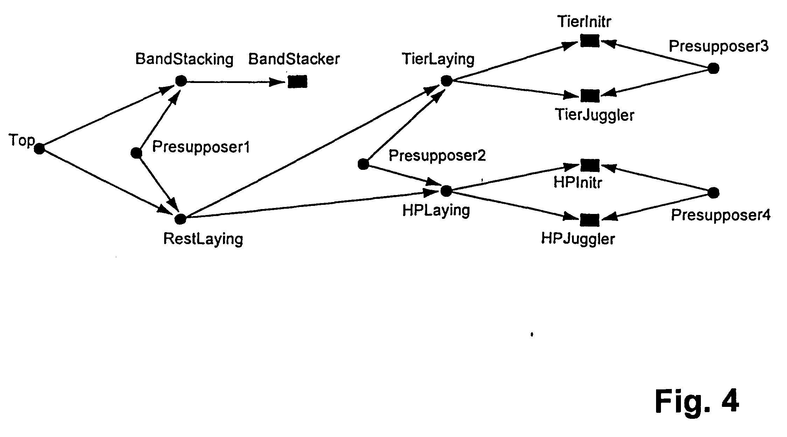

After selection of the apropriate files the marker, its pieces, the constraints, and the goal net file, which are all stored in some storage means, e.g. a harddisk, floppy disk etc., are loaded by a processing means, e.g. a computer. Then a goal net according to the specification in the goal net file is built, as shown in Figure 4. The goal net of Figure 4 corresponds to the following goal net file:
//Central criteria:
Criterion Top (Marker laid).
// Goals:
Goal BandStacking (Band stacking).
Goal RestLaying (Laying remaining pieces)
Goal TierLaying (Laying leftmost tier).
Goal HPLaying (Laying remaining remaining Hodge-Podge of pieces).
//Sortkeys:
Sortkey YSpanDesc: (Y-Span, Descending).
//Interactors:
Interactor BandLayer (Band layer): Stacker (Bands, WaistBand,*,[1,-1],0).
Interactor Tierlnitr (Tier initiator): TierInitiator (Tier,1,*,YSpanDesc, left, [-1,4], [0,0,0.05],*,*,0.94, 0.85).
Interactor HPInitr (HodgePodge initiator): TierInitiator (HP,*,*,YSpanDesc, left,[-1,4],[0,05, 0.1],*, Bands 81.0], 0.88, 0,85).
Interactor TierJuggler (Tier juggler): Juggler(Tier, *,, YSpanDescend,*).
Interactor HP Juggler (Hodge Podge juggler): Juggler (HP, *, YSpanDescend,*).
//Goal dependencies:
Top uses BandStacking to extend 0.2.
Top uses RestLaying to extend 0.8.
BandStacking uses BandLayer.
RestLaying presupposes BandStacking.
RestLaying uses TierLaying to extend 0.4.
RestLaying uses HPLaying to extend 0.6.
HPLaying presupposes TierLaying.
TierLaying motivates Tierlnitr.
TierLaying uses TierJuggler.
TierJuggler presuposes Tierlnitr.
HPLaying motivates HPInitr.
HPLaying uses HPJuggler.
HPJuggler presupposes HPInitr.

In Figure 4 goals are indicated by circles and interactors are indicated by retangles. The various parameters in the interactor specifications indicate interactor-specific details such as the preferential laying order of pieces and the criteria for building a cluster.

When the goal net has been built, the top goal is simply artificially motivated. This is continued until the top level goal returns a sufficient level of satisfaction. At this stage, the interactors have all either accomplished their purpose or else satisfied themselves that they can proceed no further. Then the automatic marker making is completed.

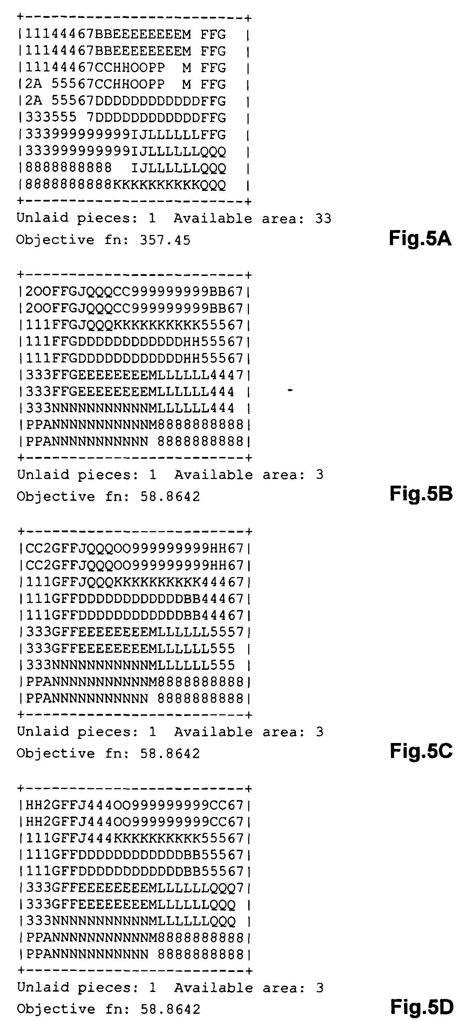

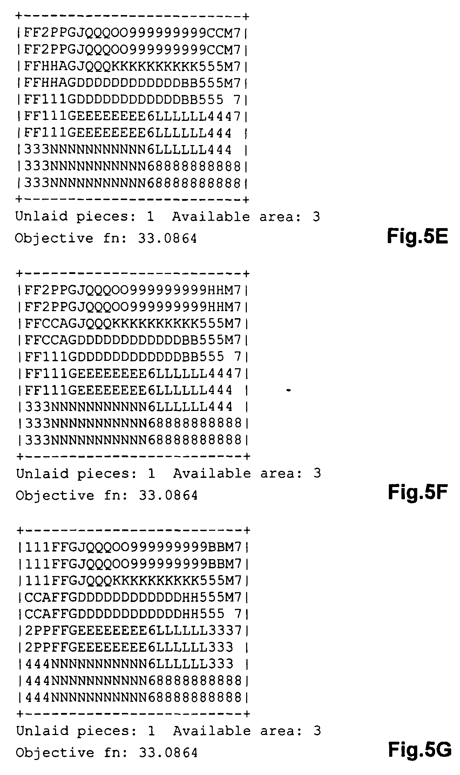

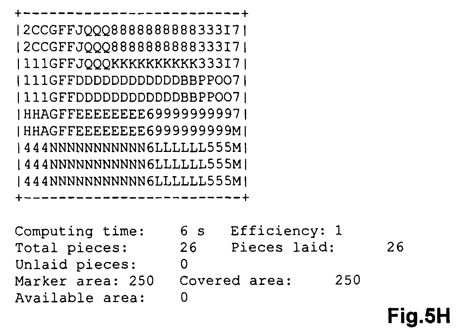

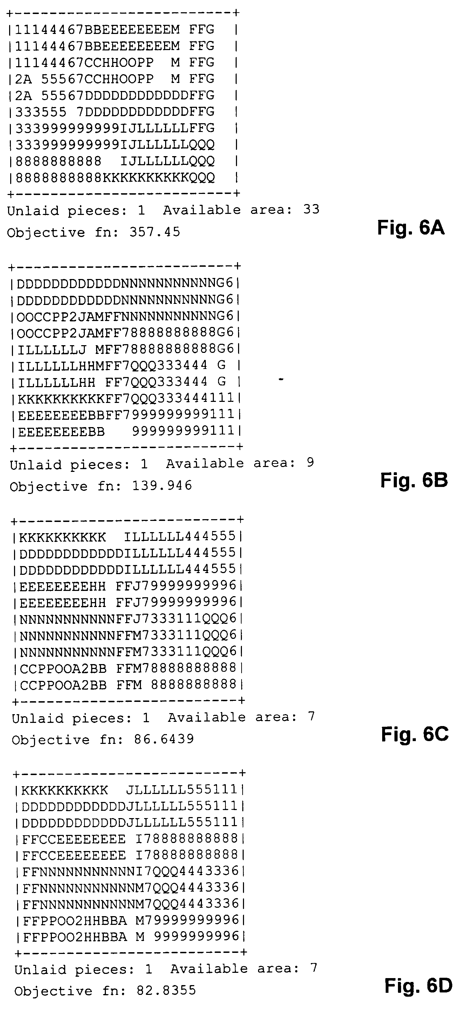

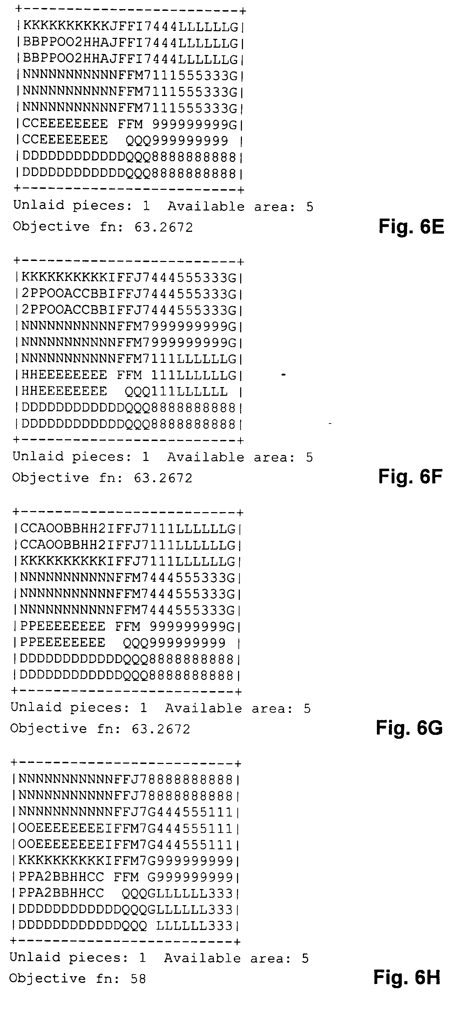

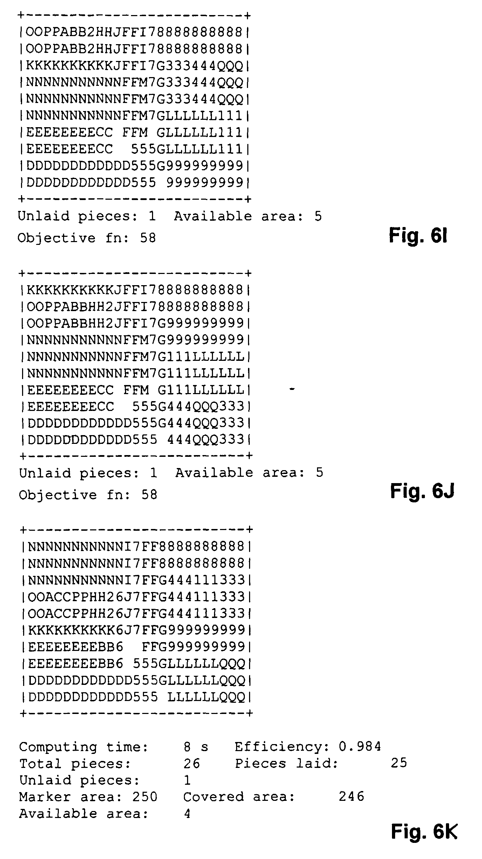

Figures 5A to 5H and 6A to 6K show some of the intermediate states of the marker during an automatic marker making process performed according to the invention. In Figures 5 and 6, the rectangular pieces are indicated by same characters. It can be seen that during the automatic marker making according to the invention the intermediate markers differ from each other rather clearly but that the parameters given below each marker improve. In Figure 5, a process is shown at the end of which all pieces are laid whereas at the end of the process shown in Figure 6 one piece has not been laid, although the same configuration files have been used.

## Claims

1. A method of automatically making markers characterized by the use of a goal net which consists of goals and interactors, connected to each other, and for which a first and a second direction of information flow is defined from a top level goal to a bottom level goal / an interactor and from a bottom level goal / an interactor to a top level goal, respectively,
- each of said goals (Top, BandStacking, RestLaying, TierLaying, HPLaying) making decisions and passing the decision in the first direction and passing the results of evaluations passed to it from an goal/intercator in the second direction, and
- each of said interactors (BandStacker, TierInitr, TierJuggler, HPInitr, HPJuggler) operating on the marker, evaluating the result of the operation and passing the result of the evaluation in the second direction.

2. The method according to claim 1 wherein each goal and each interactor is defined as to its activity (0.0 <= TENDENCY <= 1.0), indicating and as to its non-responsitivity (0.0 <= MEMORY <= 1.0)

3. The method according to anyone of claims 1 or 2 wherein said interactors (BandStacker, TierInitr, TierJuggler, HPInitr, HPJuggler) perform the operations of positioning and orienting pieces and/or clusters of pieces in a marker.

4. A method of automatically making markers comprising the steps of:
- loading first data from a file stored in storage means into processing means, said first data defining the structure of a goal net;
- setting up a goal net within said processing means on the basis of said first data, said goal net consisting of goals and interactors;
- loading second data from a file stored in said storage means into said processing means, said second data defining the pieces and their properties; and
- processing the second data within said processing means using the goal net, wherein said interactors operate on the marker and decide on the operation of said interactors.

5. The method according to claim 4 further comprising the step of loading third data from a file stored in said storage means into said processing means, said third data defining constraints relevant to the marker to be made and being included into the processing of said second data using the goal net.

6. The method according to anyone of claims 4 or 5 further comprising the step of loading fourth data from a file stored in said storage means into said processing means, said third data defining a taxonomy for the piece types and being included into the processing of said second data using the goal net.

7. A Method of automatically making markers characterized by the use of clusters of pieces, said clusters being defined by geometrical boundaries or by the kind of pieces included in them.

8. A system for automatically making markers comprising:
- storage means for storing first data defining the structure of a goal net which consists of goals and interactors, connected to each other, and second data defining the pieces and their properties; and
- processing means for loading said first data and setting up a goal net on the basis of said first data and for loading and processing said second data using the goal net, wherein said interactors operate on the marker and said goals decide on the operation of said interactors.
